# EUROPEAN PATENT APPLICATION

(11) **EP 4 567 957 A1**
(43) Date of publication of application: **11.06.2025**
(21) Application number: 22954767.4
(22) Date of filing: 12.10.2022
(51) Int. Cl.: H01M 10/42

(54) **BATTERY SYSTEM**

(30) Priority: 11.08.2022 CN 202222116771 U
(71) Applicant: Eve Power Co., Ltd., Jingmen, Hubei 448000 (CN)
(72) Inventor: FAN, Shilin, Jingmen, Hubei 448000 (CN)
(74) Representative: Berggren Oy
(86) International application number: PCT/CN2022/124871
(87) International publication number: WO 2024/031824

(57) **Abstract**

Provided is a battery system including battery clusters (1) and cluster management boxes (2). The cluster management boxes (2) and the battery clusters (1) are connected in one-to-one correspondence. The cluster management boxes (2) are connected in series in sequence. The battery system interacts with an external device (3) through one cluster management box (2). The one cluster management box (2) is configured to determine itself as a master cluster management box after receiving an interactive signal sent by the external device; to serve other ones of the cluster management boxes (2) excluding the one cluster management box as slave cluster management boxes; and to address each slave cluster management box while transmitting the interactive signal to each slave cluster management box.

## Description

This application claims priority to and the benefit of Chinese Patent Application No. 202222116771.X, filed on August 11, 2022. The disclosure of the aforementioned application is incorporated herein by reference in its entirety.

### TECHNICAL FIELD

The present application relates to battery technology, for example, to a battery system.

### BACKGROUND

In the fields of application of new energy battery systems such as ships, energy storage, and commercial vehicles, when realizing large-capacity battery systems, the approach is to directly connect in parallel at the system level. If it is necessary to change the capacity of the battery system so as to increase the electric quantity of the battery system, the parallel connection of the battery packs is required at the system level. This parallel connection scheme is also referred to as multi-cluster parallel connection. However, the parallel scheme at the system level needs to transmit information of the multiple clusters, and the information of the multiple clusters needs to be concentrated in the three level master controls for processing and then to output to the outside as a whole. Moreover, the additional control logic is often required in the use of the three level master controls. And, the master control, which processes information of the multiple clusters, also requires additional manual addressing to ensure the uniqueness of its information. So, the addressing is prone to errors and thus labor costs are also increased.

### SUMMARY

The present application provides a battery system to improve addressing accuracy, reduce design costs, and reduce labor costs.

The present application provides a battery system including a plurality of battery clusters and a plurality of cluster management boxes; in which the plurality of cluster management boxes and the plurality of battery clusters are connected in one-to-one correspondence; the plurality of cluster management boxes are connected in series in sequence; and the battery system interacts with an external device through one of the plurality of cluster management boxes;

the one cluster management box is configured to determine itself as a master cluster management box after receiving an interactive signal sent by the external device; to serve other ones of the plurality of cluster management boxes excluding the one cluster management box as slave cluster management boxes; and to address each of the slave cluster management boxes while transmitting the interactive signal to each of the slave cluster management boxes.

### BRIEF DESCRIPTION OF THE DRAWINGS

FIG. 1 is a block diagram showing a partial structure of a battery system according to embodiments of the present application; and
FIG. 2 is an interface diagram of cluster management boxes of a battery system according to embodiments of the present application.

### DETAILED DESCRIPTION

The present application will now be described with reference to accompanying drawings and examples. The specific embodiments described herein are merely illustrative of the present application. For ease of description, only parts related to the present application are shown in the drawings.

Embodiments of the present application provide a battery system, which may be a large-capacity battery system and may be applied to scenarios such as vehicle, marine, and energy storage.

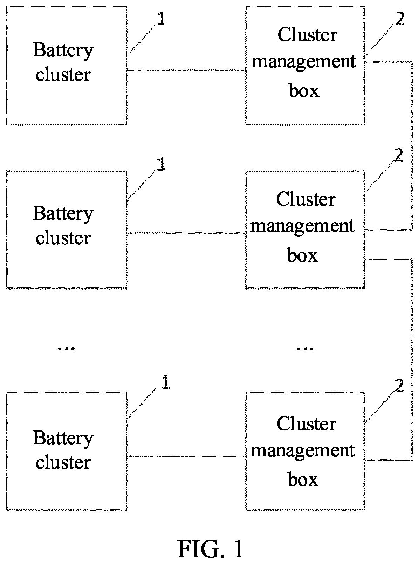

FIG. 1 is a block diagram showing a partial structure of a battery system. Referring to FIG. 1, the battery system may include a plurality of battery clusters 1, and a plurality of cluster management boxes 2 connected in one-to-one correspondence with the plurality of battery clusters 1. The plurality of cluster management boxes 2 in the battery system are sequentially connected in series.

In the present embodiments, the battery system may perform signal interaction with the external device through any one of the cluster management boxes 2. Then, the cluster management box 2 for signal interaction with the external device is referred to as a master cluster management box and acts as a master control of the battery system. The other cluster management boxes 2, which do not require signal interaction with the external device, are then referred to as slave cluster management boxes, and thus act as slave controls of the battery system. **In** this way, it is not necessary to add additional three level master controls to the battery system, thereby saving the costs of the battery system.

**In** the present embodiments, the cluster management box 2 is configured to determine itself as the master cluster management box after receiving the interactive signal transmitted by the external device, and to determine other ones of the plurality of cluster management boxes 2 excluding the master cluster management box as the slave cluster management boxes. The master cluster management box 2 addresses each slave cluster management box while transmitting an interactive signal to each slave cluster management box.

The structures and the functions of all the cluster management boxes 2 are the same. When a user connects one cluster management box 2 to the external device, the one cluster management box 2 receives an interactive signal transmitted from the external device. At this time, the one cluster management box 2 can serve itself as the master cluster management box, and performs an operation corresponding to the role of the master cluster management box. The operation may include, but is not limited to, interacting with the external device as an interface for the battery system to communicate with the external device; allocating the address to other slave cluster management boxes; and transmitting the interactive signal transmitted from the external device to the other slave cluster management boxes.

The manner in which the master cluster management box addresses each slave cluster management box may include some automatic addressing methods commonly used in the art, and this embodiment is not limited thereto.

The battery system includes a plurality of cluster management boxes connected in series in sequence. The plurality of cluster management boxes and the plurality of battery clusters are arranged in one-to-one correspondence. The battery system can perform signal interaction with the external device through any one of the cluster management boxes. The cluster management box that performs signal interaction with the external device serves as the master cluster management box to act as a master control of the system, and automatically addresses each slave cluster management box while transmitting an interactive signal to each slave cluster management box. In this way, the master control logic does not need to be added to the battery system, thereby reducing the design cost and eliminating the requirement to manually allocate an address to a cluster-level master control, which reduces the labor cost and improves the automation level of the battery system. In the battery system according to the present embodiments, any one of the cluster management boxes can be used as the master cluster management box, so as to automatically address other slave cluster management boxes and act as a master control to communicate with the external device. So, the battery system can be applied to different application scenarios, and the battery system has strong versatility and compatibility.

In some embodiments, all the cluster management boxes 2 in the battery system are sequentially connected in series to form a series low-voltage signal loop (not shown in FIG. 1). In the series low-voltage signal loop, the master cluster management box is connected to any one of the slave cluster management boxes, and every two adjacent slave cluster management boxes are connected in series with each other. For example, the cluster management boxes 2 in the battery system include a cluster management box a to a cluster management box d in series. Assuming that the cluster management box a is the master cluster management box, the next-level slave cluster management box connected in series with the cluster management box a is a slave cluster management box b, the next-level slave cluster management box connected in series with the cluster management box b is a slave cluster management box c, and the next-level slave cluster management box connected in series with the cluster management box c is a slave cluster management box d. Then, the cluster management box d is connected to the cluster management box a to form the series low-voltage signal loop.

In the series low-voltage signal loop, the master cluster management box is configured to sequentially transmit interactive signals to slave cluster management boxes and to address each slave cluster management box in a positive direction of the series low-voltage signal loop. For example, in the above examples, assuming that the cluster management box a is the master cluster management box, the positive direction of the series low-voltage signal loop is a→b→c→d. That is, the master cluster management box a transmits a signal to the slave cluster management box b and addresses the slave cluster management box b; the slave cluster management box b transmits a signal to the next-level slave cluster management box c and addresses the slave cluster management box c; and then the slave cluster management box c transmits a signal to the next-level slave cluster management box d and addresses the slave cluster management box d, thereby automatically addressing each slave cluster management box in sequence.

In embodiments, the master cluster management box is configured to send an interactive signal carrying an addressing signal to a next-level slave cluster management box connected in series with the master cluster management box. At the time of implementation, the master cluster management box may add an addressing signal to the received interactive signal thereof, and then send the interactive signal that has added the addressing signal to the next-level slave cluster management box in series therewith. Illustratively, the addressing signal may include information required for addressing. For example, the addressing signal may include an initial addressing and an addressing threshold; or the addressing signal may also include addressing information obtained by updating an addressing threshold set for the initial addressing.

In some embodiments, the addressing signal may be represented by a duty cycle waveform. For example, assuming that the initial addressing is 0 and the addressing threshold is 2, the addressing signal added to the interactive signal by the master cluster management box a is the duty cycle waveform with a 2% rising edge. Then, the master cluster management box a sends the interactive signal, to which the addressing signal is added, to the next-level slave cluster management box b in series therewith.

The slave cluster management box is configured to obtain an addressing signal from the interactive signal after receiving the interactive signal transmitted by the master cluster management box or the previous-level slave cluster management box; to determine the addressing itself according to the addressing signal; to obtain an updated interactive signal according to the addressing signal; and to transmit the updated interactive signal to the next-level slave cluster management box in series therewith.

In the implementation, the manner of obtaining the updated interactive signal by the slave cluster management box according to the addressing signal may include: updating the received addressing signal according to a setting rule, and then replacing the original addressing signal of the interactive signal with the updated addressing signal, so as to obtain the updated interactive signal.

For example, after the slave cluster management box b receives the interactive signal, the addressing signal "duty cycle waveform with the 2% rising edge" is obtained from the interactive signal, and then the identification information corresponding to 2% is searched from the configuration data table stored in the slave cluster management box b, to serve as the addressing of the slave cluster management box b. Next, the slave cluster management box b updates the duty cycle waveform with the rising edge to a duty cycle waveform with a 4% rising edge according to a set addressing threshold (i.e., a set rule, for example, 2), and then adds the duty cycle waveform with the 4% rising edge to the interactive signal. Then, the updated interactive signal is sent by the slave cluster management box b to the next-level slave cluster management box c in series with the slave cluster management box b.

Similarly, after the slave cluster management box c receives a signal, the addressing of the current cluster management box is obtained by searching the table based on the duty cycle waveform with the 4% rising edge. The duty cycle waveform with the rising edge is updated by the slave cluster management box c to a duty cycle waveform with a 6% rising edge to be added to the interactive signal. The updated interactive signal is sent by the slave cluster management box c to the next-level slave cluster management box d connected in series with the slave cluster management box c. After the slave cluster management box d receives the signal, the addressing of the current cluster management box is obtained by searching the table based on the duty cycle waveform with the 6% rising edge.

The present embodiment is not limited to the addressing method described above, and other addressing methods may be used.

In embodiments, the plurality of cluster management boxes may be connected in series by signal lines.

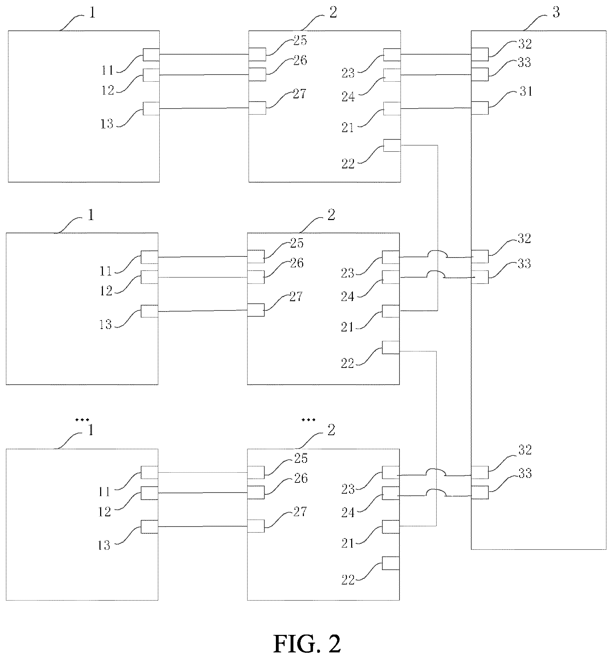

In embodiments, as shown in FIG. 2, each cluster management box 2 may include a signal input interface 21 and a signal output interface 22. The signal input interface 21 is configured to receive an interactive signal transmitted from the external device 3 or the previous-level cluster management box. The signal output interface 22 is configured to output an interactive signal to the next-level cluster management box. The external device 3 may send an interactive signal to the master cluster management box through the signal input interface 21.

In embodiments, each cluster management box 2 may further include a charge-discharge positive electrode interface 23, a charge-discharge negative electrode interface 24, a battery positive electrode interface 25, a battery negative electrode interface 26, and a Battery Stack Unit (referred briefly to as BSU) interface 27. The charge-discharge positive electrode interface 23 is connected to a battery positive electrode interface 32 of the external device 3. The charge-discharge negative electrode interface 24 is connected to a battery negative electrode interface 33 of the external device 3. The battery positive electrode interface 25 is connected to a positive electrode 11 of the corresponding battery cluster 1. The battery negative electrode interface 26 is connected to a negative electrode 12 of the corresponding battery cluster 1. The BSU interface 27 is connected to a BSU interface 13 of the corresponding battery cluster 1.

In embodiments, the cluster management box 2 is further provided with a collection module (not shown). The collection module is configured to collect battery information of a battery cluster to which the collection module is correspondingly connected. In implementation, the battery information may be obtained through the BSU interface 27.

In embodiments, the slave cluster management box is further configured to send the collected battery information to the master cluster management box via a message. The message may be a Controller Area Network (referred briefly to as CAN) message, which is sent to the master cluster management box through the CAN bus.

In embodiments, the master cluster management box is further configured to determine target battery information based on battery information of each battery cluster in the battery system; and to transmit the target battery information to the external device. In the implementation, the battery information with the lowest energy efficiency may be used as the target battery information.

In the battery system according to the present embodiments, any one of the cluster management boxes can be used as the master cluster management box to automatically address other slave cluster management boxes, and the master cluster management box can act as a master control to communicate with an external device, so that the battery system can be applied to different application scenarios, and the battery system has strong versatility and compatibility.

## Claims

1. A battery system comprising a plurality of battery clusters and a plurality of cluster management boxes; wherein the plurality of cluster management boxes and the plurality of battery clusters are connected in one-to-one correspondence; the plurality of cluster management boxes are connected in series in sequence; and the battery system interacts with an external device through one of the plurality of cluster management boxes;
the one cluster management box is configured to determine itself as a master cluster management box after receiving an interactive signal sent by the external device; to serve other ones of the plurality of cluster management boxes excluding the one cluster management box as slave cluster management boxes; and to address each of the slave cluster management boxes while transmitting the interactive signal to each of the slave cluster management boxes.

2. The battery system according to claim 1, wherein the plurality of cluster management boxes in the battery system are connected in series in sequence to form a series low-voltage signal loop; the master cluster management box is configured to transmit the interactive signal to each of the slave cluster management boxes in sequence in a positive direction of the series low-voltage signal loop and address each of the slave cluster management boxes.

3. The battery system according to claim 1 or 2, wherein the master cluster management box is configured to send an interactive signal carrying an addressing signal to a next-level one of the slave cluster management boxes connected in series with the master cluster management box;
the slave cluster management box is configured to obtain the addressing signal from the interactive signal after receiving the interactive signal sent by the master cluster management box or a previous-level one of the slave cluster management boxes; to determine an addressing of the slave cluster management box according to the addressing signal; to obtain an updated interactive signal according to the addressing signal; and to send the updated interactive signal to a next-level one of the slave cluster management boxes connected in series with the slave cluster management box.

4. The battery system according to claim 3, wherein the addressing signal is represented by a duty cycle waveform.

5. The battery system according to claim 3, wherein each of the cluster management boxes comprises a signal input interface and a signal output interface; the signal input interface is configured to receive the interactive signal sent by the external device or the previous-level cluster management box; and the signal output interface is configured to output the interactive signal to the next-level cluster management box.

6. The battery system according to claim 5, wherein the cluster management box further comprises:
a charge-discharge positive electrode interface, a charge-discharge negative electrode interface, a battery positive electrode interface, a battery negative electrode interface and a battery stack unit interface;
the charge-discharge positive electrode interface is connected to a battery positive electrode interface of the external device;
the charge-discharge negative electrode interface is connected to a battery negative electrode interface of the external device;
the battery positive electrode interface is connected to a positive electrode of one of the plurality of battery clusters corresponding to the cluster management box;
the battery negative electrode interface is connected to a negative electrode of the battery cluster corresponding to the cluster management box;
the battery stack unit interface is connected to a battery stack unit interface of the battery cluster corresponding to the cluster management box.

7. The battery system according to claim 1 or 2, wherein the plurality of cluster management boxes are connected in series in sequence through signal lines.

8. The battery system according to claim 1 or 2, wherein each of the plurality of cluster management boxes comprises a collection module, and the collection module is configured to collect battery information of one of the plurality of battery clusters corresponding to the cluster management box.

9. The battery system according to claim 8, wherein the slave cluster management box is configured to send the battery information collected to the master cluster management box via a message.

10. The battery system according to claim 9, wherein the master cluster management box is further configured to determine target battery information based on the battery information of each of the plurality of battery clusters in the battery system, and to send the target battery information to the external device.
